# EUROPÄISCHE PATENTSCHRIFT

(11) **EP 0 545 883 B1**
(45) Veröffentlichungstag und Bekanntmachung des Hinweises auf die Patenterteilung: **10.09.1997**
(21) Anmeldenummer: 92890219.6
(22) Anmeldetag: 14.10.1992
(51) Int. Cl.: C08K 5/39, C08L 23/22

(54) **Luftschlauch für Fahrzeugbereifungen**
Innertube for tires
Chambre à air pour pneumatiques

(30) Priorität: 04.12.1991 AT 2407/91
(43) Veröffentlichungstag der Anmeldung: 09.06.1993
(73) Patentinhaber: Semperit Reifen Aktiengesellschaft, A-2514 Traiskirchen (AT)
(72) Erfinder: Fuhrmann, Erich, A-2500 Baden (AT)
(74) Vertreter: Vinazzer, Edith, Dipl.-Ing.

(56) Entgegenhaltungen:
- EP-A- 0 406 603
- DE-A- 4 027 114
- US-A- 4 039 506
- I.FRANTA 'ELASTOMERS AND RUBBER COMPOUNDING MATERIALS' 1989, ELSEVIER, AMSTERDAM NL

## Beschreibung

Die Erfindung betrifft einen Luftschlauch für Fahrzeugbereifungen, welcher aus einer Kautschukmischung gefertigt ist, deren Kautschukkomponente aus Butylkautschuk besteht und, bezogen auf 100 Gewichtsteile Kautschuk, bis zu 4 Gewichtsteile Beschleuniger enthält.

In den letzten Jahren wurden intensive Anstrengungen unternommen, die in der kautschukverarbeitenden Industrie verwendeten Chemikalien hinsichtlich ihrer toxikologischen oder karzinogenen Wirkung zu untersuchen. Diskutiert und überprüft wurde dabei insbesondere das Entstehen und Vorkommen von Nitrosaminen, auch in der Reifen erzeugenden Industrie. Dabei wurde festgestellt, daß Nitrosamine in allen Gummiartikeln unter den Bedingungen der Vulkanisation entstehen können, falls die Reaktanden (Amine und nitrosierende Agenzien) in passenden Mengen vorliegen bzw. entstehen. In diesem Zusammenhang sind viele der am Markt befindlichen Vulkanisationsbeschleuniger in Verruf geraten, und zwar insbesondere solche, die während der Vulkanisation nitrosierbare Amine abspalten. Es gibt nun auch Nitrosamine, die als nicht krebserregend gelten und auch Beschleuniger, bei denen während der Vulkanisation unbedenkliche Nitrosamine entstehen. So ist es beispielsweise bekannt, daß es aus der Gruppe der Dithiocarbamatbeschleuniger, die krebserregende Nitrosamine bei der Vulkanisation unter bestimmten Voraussetzungen bilden können, eine Ausnahme gibt, und zwar mit Zink-Dibenzyl-Dithiocarbamat, dessen entstehendes Nitrosodibenzylamin als nicht karzinogen festgestellt wurde. Daneben sind erfreulicherweise seit Jahren verstärkt Beschleuniger entwickelt und auf den Markt gebracht worden, die keine Nitrosamine bilden und als ungefährlich eingestuft werden. Dazu zählen beispielsweise die Beschleuniger aus der Gruppe der Thiophosphate, der Xanthogenate oder die Beschleuniger aus der Mercaptogruppe. Bezüglich obiger Ausführungen wird auf den Artikel "Nitrosamine in der Gummiindustrie - Gefahr und Möglichkeiten zur Vermeidung" in der Zeitschrift "Kautschuk Gummi Kunststoffe" 1/1986-Jahrgang 39, Seiten 6 bis 8, verwiesen.

Vielfach ist es somit schon möglich, in Kautschukmischungen, und zwar im Zusammenhang mit bestimmten Kautschuktypen, etwa bei Naturkautschuk, auf unbedenkliche Beschleunigersysteme auszuweichen. Für Luftschläuche bzw. Innenschläuche für Fahrzeugbereifungen kommen nun nur Kautschuktypen in Betracht, wie insbesondere Butylkautschuk, die dem fertigen Produkt, also Luftschläuchen für PKW- und LKW-Reifen, Fahrradreifen und Zweiradbereifungen, die erforderliche Luftdichtigkeit bzw. Luftundurchlässigkeit verleihen und bezüglich der geforderten physikalischen Eigenschaften entsprechen. Butylkautschuk ist nun bekannterweise ein Polymer mit nur geringem Anteil an ungesättigten C-C-Bindungen und ist daher ein Polymer mit vergleichsweise wenig Vernetzungsstellen, so daß nur bestimmte Beschleunigertypen entsprechen. Als Beschleuniger für Butylmischungen eignen sich vorrangig Beschleuniger aus der Gruppe der Thiurame, und hier beispielsweise Tetramethylthiuramdisulfid (TMTD), da dieser Ultrabeschleuniger die erforderliche Schwefelvernetzung bei der Vulkanisation in ausreichendem Maße aktiviert. Thiurambeschleuniger spalten jedoch bei der Vulkanisation nachweislich karzinogene Nitrosamine ab (siehe beispielsweise Artikel "1,1 Summary of nitrosamine toxicology" aus "Kautschuk Gummi Kunststoffe", 44.Jahrgang, 5/1991). Es wurde nun schon vielfach versucht, konventionelle und als ungefährlich eingestufte Beschleunigertypen zu verwenden. Die diesbezüglichen Versuche sind jedoch fehlgeschlagen, da diese Beschleuniger die Schwefelvernetzung nicht in ausreichendem Ausmaß bewirken konnten.

Hier setzt nun die Erfindung ein, deren Aufgabe dann besteht, für Butylmischungen, wie sie für Luftschläuche von Fahrzeugbereifungen verwendet werden, ein Beschleunigersystem zu ermitteln, das keine karzinogenen Nitrosamine freisetzt und die Schwefelvernetzung in ausreichendem Ausmaß aktiviert.

Gelöst wird die gestellte Aufgabe erfindungsgemäß dadurch, daß sich der Beschleunigeranteil in der Kautschukmischung zumindest aus einem Beschleuniger aus der Mercaptogruppe und aus Zink-Dibenzyl-Dithiocarbamat (ZBEC) zusammensetzt, und daß die Kautschukmischung einen aktiven hellen Füllstoff in einem Anteil von 2 bis 15, insbesondere 5 bis 10 Gewichtsteilen, bezogen auf 100 Gewichtsteile Kautschuk, enthält.

Es wurde festgestellt, daß durch die erfindungsgemäße Kombination dieser beiden Beschleunigertypen, von welchen jeder für sich gesehen, für eine verarbeitungssichere und ausreichende Vernetzung von Butylkautschukmischungen nicht in Frage kommt, eine mit dem nach dem Stand der Technik unter Einsatz eines Thiurambeschleunigers vergleichbar gute Aktivierung und Schwefelvernetzung und eine ausreichende Vernetzungsdichte erzielbar ist. Dabei zählen beide im Rahmen der Erfindung eingesetzten Beschleunigertypen zu den nicht karzinogenen Chemikalien. Für die überraschende Wirkung dieser beiden miteinander kombinierten Beschleunigertypen dürften synergistische Effekte verantwortlich sein. Dabei dürfte der Beschleuniger aus der Mercaptogruppe eine sichere Anvulkanisation der Butylmischung und das Zink-Dibenzyl-Dithiocarbamat (ZBEC) eine Erhöhung der Vernetzungsdichte und -geschwindigkeit bewirken. Der aktive helle Füllstoff zeigt ebenfalls eine positive Wirkung auf die Aktivierung und Ausbildung des Vernetzungsvorganges und wirkt sich auf die erwünschten physikalischen Eigenschaften, insbesondere auf die Shore-Härte, des Luftschlauches günstig aus.

Besonders günstig für die erforderliche Aktivierung und Anhebung der Schwefelvemetzung hat es sich dabei erwiesen, wenn, jeweils bezogen auf 100 Gewichtsteile Kautschuk, der Anteil an Beschleuniger aus der Gruppe der Mercaptobenzothiazole 1,5 bis 2,5, insbesondere 2 Gewichtsteile, und der Anteil des Zink-Dibenzyl-Dithiocarbamat (ZBEC) 0,75 und 1,25, insbesondere 1 Gewichtsteil, beträgt.

Die aus der Mercaptogruppe bekannten Beschleuniger sind sämtlich als unbedenklich eingestuft. Im Hinblick auf die erzielbare Wirkung haben sich nun nach einem weiteren Merkmal der Erfindung aus der Mercaptogruppe die Mercaptobenzothiazole, und zwar insbesondere ein Dimercaptobeschleuniger wie Dibenzothiazyldisulfid (MBTS) als besonders geeignet erwiesen.

Als aktiver heller Füllstoff wird bevorzugt Siliciumdioxyd beigemengt.

Um den oben erwähnten synergistischen Effekt zu unterstützen ist es dabei von Vorteil, wenn der Kautschukmischung, bezogen auf 100 Gewichtsteile Kautschuk, ein weiterer Beschleuniger aus der Gruppe der Guanidine beigesetzt wird. Auch die Beschleuniger aus der Gruppe der Guanidine spalten nach dem heutigen Wissensstand bei der Vulkanisation keine karzinogenen Nitrosamine ab und gelten als unbedenklich. Als besonders günstig hat sich dabei erwiesen, wenn der Beschleuniger aus der Gruppe der Guanidine, bezogen auf 100 Gewichtsteile Kautschuk, in einem Anteil zwischen 0,3 und 0,5 Gewichtsteilen, zugesetzt ist, und wenn weiters Diphenylguanidin (DPG) verwendet wird.

Die Kautschukmischung enthält darüber hinaus als weitere Mischungsbestandteile, und zwar jeweils in den für Luftschlauchmischungen üblichen Gewichtsanteilen, Ruß, Weichmacher, Spezialwachs, Stearinsäure, Zinkoxyd, Schwefel und Verarbeitungshilfsmittel einschließlich Vulkanisationsverzögerer.

Die vorliegende Erfindung wird nun anhand der in der beiliegenden Tabelle enthaltenen Mischungsbeispiele näher erörtert.

Dabei ist in Spalte 1 die Mischungszusammensetzung für eine typische Innenschlauchkautschukmischung nach dem Stand der Technik, und zwar wie sie insbesondere für Autoschläuche verwendet wird, angegeben. Das Beschleunigersystem enthält 1 Gewichtsteil eines Thiurambeschleunigers (Tetramethylthiuramdisulfid) und 0,5 Gewichtsteile eines Mercaptobeschleunigers (MBTS), der als Sekundärbeschleuniger zur Erhöhung der Verarbeitungssicherheit beiträgt und der jedoch nicht zwingend beigesetzt werden muß.

Die zweite Spalte enthält eine Mischungszusammensetzung für eine nach der Erfindung gestaltete Luftschlauch-Kautschukmischung.

In der erfindungsgemäßen Mischung kann der Anteil an MBTS zwischen 1,5 und 2,5 Gewichtsteilen betragen, der Anteil an ZBEC zwischen 0,75 und 1,25 Gewichtsteilen, um eine ausreichend gute bzw. zufriedenstellende Vernetzungswirkung zu gewährleisten. Zusätzlich ist noch ein Anteil an aktivem hellem Füllstoff (SiO₂) zugesetzt, der auf bis zu 15 Gewichtsteile erhöht werden kann bzw. mindestens 2 Gewichtsteile betragen sollte. Der Anteil an DPG, welcher in diesem Mischungsbeispiel 0,3 Gewichtsteile beträgt, kann unter dem Gesichtspunkt, daß zufriedenstellende Ergebnisse erzielt werden sollen, auf etwa 0,5 Gewichtsteile erhöht werden.

Die Erfindung ist auf die beschriebenen Mischungsbeispiele nicht eingeschränkt. So ist es insbesondere denkbar, einen anderen geeigneten Beschleuniger aus der Gruppe der Mercaptobeschleuniger im Rahmen der Erfindung heranzuziehen.

**TABELLE**

| | Mischung nach dem Stand der Technik | Beispiel 1 |
|---|---|---|
| Butyl | 100 | 100 |
| Chlorbutyl | - | - |
| Ruß (N660) | 60 | 60 |
| SiO₂ (aktiver heller Füllstoff) | - | 5 |
| Weichmacher | 22 | 22 |
| Spezialwachs | 1 | 1 |
| Stearinsäure | 1,50 | 1,50 |
| Zinkoxyd | 5 | 5 |
| TMTD | 1 | - |
| MBTS | 0,50 | 2 |
| DPG | - | 0,30 |
| ZBEC | - | 1 |
| Schwefel | 2 | 2 |
| Vulkanisationsverzögerer | 0,45 | - |

## Patentansprüche

1. Luftschlauch für Fahrzeugbereifungen, welcher aus einer Kautschukmischung gefertigt ist, deren Kautschukkomponente aus Butylkautschuk besteht und, bezogen auf 100 Gewichtsteile Kautschuk, bis zu 4 Gewichtsteile Beschleuniger enthält, dadurch gekennzeichnet, daß sich der Beschleunigeranteil in der Kautschukmischung zumindest aus einem Beschleuniger aus der Mercaptogruppe und aus Zink-Dibenzyl-Dithiocarbamat (ZBEC) Beschleuniger zusammensetzt, und daß die Kautschukmischung einen aktiven hellen Füllstoff in einem Anteil von 2 bis 15, insbesondere 5 bis 10 Gewichtsteilen, bezogen auf 100 Gewichtsteile Kautschuk, enthält.

2. Luftschlauch nach Anspruch 1, dadurch gekennzeichnet, daß in der Kautschukmischung bezogen auf 100 Gewichtsteile Kautschuk, der Anteil des Beschleunigers aus der Gruppe der Mercaptobeschleuniger 1,5 bis 2,5, insbesondere 2 Gewichtsteile, und der Anteil des Dithiocarbamatbeschleunigers 0,75 und 1,25, insbesondere 1 Gewichtsteil, beträgt.

3. Luftschlauch nach Anspruch 1 oder 2, dadurch gekennzeichnet, daß der Beschleuniger aus der Mercaptogruppe einen Beschleuniger aus der Gruppe der Mercaptobenzothiazole enthält.

4. Luftschlauch nach Anspruch 3, dadurch gekennzeichnet, daß der Beschleuniger aus der Gruppe der Mercaptobenzothiazole ein Dimercaptobaschleuniger, insbesondere Dibenzothiazyldisulfid (MBTS) ist.

5. Luftschlauch nach einem der Ansprüche 1 bis 4, dadurch gekennzeichnet, daß der Kautschukmischung als aktiver heller Füllstoff Kieselsäure (SiO₂) beigemengt ist.

6. Luftschlauch nach einem der Ansprüche 1 bis 5, dadurch gekennzeichnet, daß der Kautschukmischung, bezogen auf 100 Gewichtsteile Kautschuk, ein weiterer Beschleuniger aus der Gruppe der Guanidine beigemengt ist.

7. Luftschlauch nach Anspruch 6, dadurch gekennzeichnet, daß der Anteil des Beschleunigers aus der Gruppe der Guanidine, bezogen auf 100 Gewichtsteile Kautschuk, zwischen 0,3 und 0,5 Gewichtsteile beträgt.

8. Luftschlauch nach Anspruch 5 oder 6, dadurch gekennzeichnet, daß die Kautschukmischung als Beschleuniger aus der Gruppe der Guanidine Diphenylguanidin (DPG) enthält.

9. Luftschlauch nach einem der Ansprüche 1 bis 8, dadurch gekennzeichnet, daß die Kautschukmischung als weitere Mischungsbestandteile, und zwar jeweils in den für Luftschlauchmischungen üblichen Gewichtsanteilen, Ruß, Weichmacher, Spezialwachs, Stearinsäure, Zinkoxyd, Schwefel und Verarbeitungshilfsmittel, enthält.

## Claims

1. Inner tube for vehicle tyres, which tube is produced from a rubber mixture, the rubber component of which comprises butyl rubber and contains up to 4 parts by weight accelerator relative to 100 parts by weight rubber, characterised in that the proportion of accelerator in the rubber mixture includes at least one accelerator selected from the mercapto group and zinc dibenzyl dithiocarbamate (ZBEC) accelerator, and in that the rubber mixture contains an active bright filler substance in a proportion of between 2 and 15, more especially between 5 and 10, parts by weight relative to 100 parts by weight rubber.

2. Inner tube according to claim 1, characterised in that the proportion of the accelerator selected from the group of mercapto accelerators is between 1.5 and 2.5, more especially 2, parts by weight, and the proportion of the dithiocarbamate accelerator is between 0.75 and 1.25, more especially 1, part by weight, in the rubber mixture relative to 100 parts by weight rubber.

3. Inner tube according to claim 1 or 2, characterised in that the accelerator selected from the mercapto group contains an accelerator selected from the group of mercaptobenzothiazoles.

4. Inner tube according to claim 3, characterised in that the accelerator selected from the group of mercaptobenzothiazoles is a dimercapto accelerator, more especially dibenzothiazyl disulphide (MBTS).

5. Inner tube according to one of claims 1 to 4, characterised in that silica (SiO₂) is admixed to the rubber mixture as the active bright filler substance.

6. Inner tube according to one of claims 1 to 5, characterised in that an additional accelerator selected from the group of guanidines is admixed to the rubber mixture, relative to 100 parts by weight rubber.

7. Inner tube according to claim 6, characterised in that the proportion of the accelerator selected from the group of guanidines, relative to 100 parts by weight rubber, is between 0.3 and 0.5 parts by weight.

8. Inner tube according to claim 5 or 6, characterised in that the rubber mixture contains diphenyl guanidine (DPG) as the accelerator selected from the group of guanidines.

9. Inner tube according to one of claims 1 to 8, characterised in that the rubber mixture contains carbon black, plasticizer, special wax, stearic acid, zinc oxide, sulphur and processing adjuvants as the additional mixture ingredients, namely in the parts by weight conventionally used for inner tube mixtures.

## Revendications

1. Chambre à air de pneumatiques pour véhicules qui est confectionnée à partir d'un mélange à base de caoutchouc dont le composant caoutchouc est constitué par du caoutchouc butyle et qui contient, par rapport à 100 parties en poids de caoutchouc, jusqu'à 4 parties en poids d'accélérateur, caractérisée en ce que la fraction d'accélérateur dans le mélange à base de caoutchouc se compose au moins d'un accélérateur du groupe mercapto et de l'accélérateur diphényldithiocarbamate de zinc (ZBEC) et que le mélange à base de caoutchouc contient une charge active claire dans une proportion de 2 à 15, en particulier de 5 à 10 parties en poids par rapport à 100 parties en poids de caoutchouc.

2. Chambre à air selon la revendication 1, caractérisée en ce que, par rapport à 100 parties en poids de caoutchouc dans le mélange à base de caoutchouc, la fraction d'accélérateur du groupe des accélérateurs mercapto s'élève à 1,5 - 2,5, notamment à 2 parties en poids et que la fraction de l'accélérateur au dithiocarbamate s'élève à 0,75 - 1,25, notamment à 1 partie en poids.

3. Chambre à air selon la revendication 1 ou 2, caractérisée en ce que l'accélérateur du groupe mercapto contient un accélérateur du groupe des mercaptobenzothiazoles.

4. Chambre à air selon la revendication 3, caractérisée en ce que l'accélérateur du groupe des mercaptobenzothiazoles est un accélérateur dimercapto, en particulier du disulfure de dibenzothiazyle (MBTS).

5. Chambre à air selon l'une des revendications 1 à 4, caractérisée en ce que de la silice (SiO₂) est incorporée au mélange à base de caoutchouc en tant que charge active claire.

6. Chambre à air selon l'une des revendications 1 à 5, caractérisée en ce que, par rapport à 100 parties en poids de caoutchouc, un accélérateur additionnel du groupe des guanidines est incorporé au mélange à base de caoutchouc.

7. Chambre à air selon la revendication 6, caractérisée en ce que la fraction d'accélérateur du groupe des guanidines par rapport à 100 parties en poids de caoutchouc se situe entre 0,3 et 0,5 partie en poids.

8. Chambre à air selon la revendication 5 ou 6, caractérisée en ce que le mélange à base de caoutchouc contient de la diphénylguanidine (DPG) en tant qu'accélérateur du groupe des guanidines.

9. Chambre à air selon l'une des revendications 1 à 8, caractérisée en ce que le mélange à base de caoutchouc contient en tant que composants de mélange additionnels et notamment dans les proportions pondérales habituelles pour des mélanges pour chambres à air, du noir de carbone, un plastifiant, de la cire spéciale, de l'acide stéarique, de l'oxyde de zinc, du soufre et des auxiliaires de transformation.
